# EUROPEAN PATENT SPECIFICATION

(11) **EP 2 994 568 B1**
(45) Date of publication and mention of the grant of the patent: **26.06.2019**
(21) Application number: 14795072.9
(22) Date of filing: 07.05.2014
(51) Int. Cl.: B01D 35/22, B01D 35/30, D21B 1/34, D21D 5/02

(54) **AN APPARATUS FOR SEPARATING PARTICLES IN A PULP SUSPENSION**
VORRICHTUNG ZUM TRENNEN VON PARTIKELN IN EINER FASERSTOFFSUSPENSION
APPAREIL DESTINÉ À LA SÉPARATION DES PARTICULES DANS UNE SUSPENSION DE PÂTE À PAPIER

(30) Priority: 07.05.2013 SE 1350557
(43) Date of publication of application: 16.03.2016
(73) Proprietor: Valmet AB, 851 94 Sundsvall (SE)
(72) Inventor: VIKSTRÖM, Tomas, S-854 60 Sundsvall (SE)
(86) International application number: PCT/SE2014/050560
(87) International publication number: WO 2014/182232

(56) References cited:
- DE-A1- 19 702 043
- DE-A1- 19 824 806
- DE-C1- 4 235 119
- DE-C1- 4 235 119
- GB-A- 1 194 385
- US-A- 3 804 244
- US-A- 3 804 244
- US-A- 3 945 576
- US-B1- 6 379 505
- SVAROVSKY , I.: '11.6 Cross-flow filtration' SOLID-LIQUID SEPARATION, 4TH ED. 2000, pages 353 - 357, XP055294758
- OCHIRKHUYAG B. ET AL.: 'Development of a high- performance cake-less continuous filtration system' CHEMICAL ENGINEERING SCIENCE vol. 63, no. 21, 2008, pages 5274 - 5282, XP025506884

## Description

### Technical Field

The present invention relates to an apparatus for separating particles in a pulp suspension.

### Background of the Invention

Screening in papermaking means separation of foreign or different particles from a pulp suspension and may be done in different process steps in a fibre line.

Pulp inevitably contains unwanted solid material. Some of the chips may not have cooked properly, and some of the fibrous material may not be completely in the form of individual fibres. Defects in wood may show up as non-fibrous solids. Contaminants other than wood may also enter in the system with chips. The purpose of screening is to remove these impurities from the main pulp stream for reject treatment as efficiently as possible and wash off the good fibres, return these to the main pulp stream and prepare the reject for treatment.

A screening apparatus, see e.g. EP0 444 051, may comprise a screen housing enclosing a cylindrical barrier, called screen member or screen basket, having apertures in the form of e.g. holes or slits for the actual screening. The screening apparatus may further comprise an inlet for the pulp suspension leading into the screen member, an accept outlet for accept, i.e. material with small particles that has passed through the screen member from the inside and out, and a reject outlet for reject, i.e. material with large particles which has not passed the screen member.

To improve the screening process, the screening apparatus may e.g. be provided with some sort of rotor, with e.g. blades or protrusions, rotating inside the screen member or else the screen member may be rotating. Further, the screen member may be provided with different variants of protrusions on its inner surface.

The ends of e.g. the moving rotor blades moves at a short distance from the inner surface of the screen member, so as to prevent the formation of a layer of pulp on the surface of the screen member and prevent the clogging of the apertures. The interaction between the moving rotor blades and the protrusions of the screen member cause pressure pulsations and/or shear forces and turbulence, which can fluidize the pulp. This causes some of the fluidized pulp to pass through the screen member as accept to the accept outlet, while it causes heavier particles, dirt and like reject material to be passed radially outwardly to the reject outlet.

Present solutions of coarse screening, called knotting, are based on pulp concentration levels of about 3-4%. Since the consistence before the screening apparatus is normally 10-12% before the screening apparatus, in order for the screening to work in practise, it is today often necessary to decrease the pulp concentration by dilution before screening and to increase the pulp concentration by dewatering or thickening after screening and before washing.

An increase in the pulp concentration implies an increase of the energy intensity required for the fluidization. The concentration, thus, defines a limit for an effective utilization of the screen. Too high a concentration results in that the flocks of the fibre suspension are not broken up, which implies that the screening process cannot continue.

In a conventional screening apparatus for pulp, the thickening along the length of the screening zone, from the inlet for unscreened pulp to the outlet for discharging concentrated impurities, is the physical problem, which limits the efficiency of the screen, with regard both to capacity and efficiency. The thickening means physically that the concentration of the fibre suspension increases from the inlet to the reject outlet along the surface of the screen member, i.e. dewatering. Impurities are also concentrated from the inlet to the reject outlet. Increased concentration implies that the strength of the fibre network increases considerably.

As the rotor of the screening apparatus rotate at equal speed along the entire length of the screening zone, the energy supply is substantially constant from the feed or inject side to the reject side of the screen member. This implies that the screening must start at too low concentration at the beginning of the screening zone, in order to prevent that the pulp concentration rapidly becomes so high that a large portion of the screening zone acts as a thickener. Too high an energy intensity in relation to the pulp concentration implies, that the pulp suspension at the beginning of the screening zone has an unnecessarily high turbulence level, and thereby has a deteriorated separation selectivity. After a short zone with ideal conditions the pulp concentration is too high, the energy is not any longer sufficient to break up the fibre network, and the final portion of the screening zone doesn't work. A high degree of thickening can also give rise to a braking effect, due to mechanically transferred force between the screen member and rotating means. In other words, the thickening implies that the screen loses both efficiency and capacity and may be damaged.

In different steps of the fibre line it is also necessary to concentrate, i.e. to dewater or thicken, the pulp suspension in a dewatering apparatus or thickener. There are different methods and may also be done in different ways using a barrier, e.g. in a corresponding way as in the screening apparatus above. Differences to screening is that in an dewatering apparatus or thickener the thickening effect is what is desired and what you want to keep is the material with the large particles that has not passed the barrier, and what you don't want to keep is the material with small particles - the liquid, called filtrate - that has passed through the barrier.
The barrier in the dewatering apparatus or thickener thus works as a filter. The dewatering may be done by simply using the gravitation or more efficiently by having an under pressure under the barrier drawing the filtrate through the barrier or alternatively by having over pressure on the pulp suspension and pressing the filtrate through the barrier.

Apart from using a screen like solution, another alternative is to use a roll press, which comprises two co-operating and counter-rotating press rolls, each having a barrier in the form of an outer surface permeable to filtrate pressed out of the pulp. The pulp is deposited on the permeable outer surface and pressed in a roll nip, or press nip, between the press rolls, whereby filtrate is pressed out of the pulp. Often, the roll press also includes one or more washing zones prior to the press nip. One example of such a roll press is disclosed in US 3,980,518, where the axes of rotation of the press rolls are in substantially the same horizontal plane, and the pulp is passing the press nip between the press rolls in a vertical direction, from below upwards.

Another known washing apparatus is a drum washer, where the pulp is deposited and dewatered on a single rotating filter drum with a barrier in the form of a permeable outer surface, after the addition of washing liquid, which displaces the liquid remaining on the pulp web after the preceding process step. The static pressure causes the filtrate to pass through the outer surface permeable to liquid. A further development of the original drum washer is the pressurized displacement washer, where the filtrate, under overpressure, is forced to pass through the permeable outer surface.

A problem with known dewatering apparatuses and washing apparatuses is that they require large and expensive machines due to low flow velocity and thus low surface efficiency. The barriers of the machines are not efficiently used and there is a maximum limit on about 5-6% of the incoming pulp concentration. Wash presses can, however, manage 10-12%.

US 6 379 505 B1 discloses an apparatus according to the preamble of present claim 1.

### Summary of the Invention

An object of the invention is to solve the above-mentioned problems with an invention as in claim 1, which builds on a new way of thinking that may be implemented in different kinds of apparatuses.

By making sure that the pulp suspension does not stay too long in the fluidization zone, the separation becomes much more efficient and the danger of clogging apertures in the barrier decreases considerably. The apparatus may be made smaller and it is possible to have a higher concentration of the incoming pulp suspension. In a screening apparatus the latter decreases the need for dilution before screening and the need for thickening after screening and before washing.

The invention in general terms relates to an apparatus for separating particles in a pulp suspension, which apparatus comprises a housing, a barrier with apertures, an inlet for the pulp suspension, a first outlet for material with large particles not having passed the barrier, a second outlet for material with small particles having passed the barrier, and a rotor on an axis, which rotor is arranged to create a fluidization zone near the barrier. The inventive apparatus comprises a separation chamber shaped like a toroid and preferably a torus or parts of a torus, with the barrier arranged as a part of the interior wall of the toroid shaped separation chamber, and in that the rotor is arranged to both create a circular flow of the incoming pulp suspension in the toroid shaped separation chamber and to clean the barrier from the pulp suspension. By designing the separation chamber per se with a toroid shape could the velocity of suspension over the barrier be kept high by the circulation established, with less reduction of the flow velocity. The toroid shaped chamber should have an even and continuous deflection of the swirl generated and may have any round or elliptic form. In a special embodiment of the toroid shaped separation chamber could the shape of the chamber form a torus.

In a preferred embodiment of the apparatus is the inlet for the pulp suspension connected tangentially to the toroid shaped separation chamber, said inlet being oriented orthogonally to the toroid shaped separation chamber. This tangential connection will strengthen the swirl generated in the separation chamber and over the barrier.

In a further embodiment of the apparatus is the inlet connected to the inner diameter of the torus shaped separation chamber, in order to further strengthen the swirl.

In the apparatus the barrier is arranged directly after the inlet and in the wall of the toroid shaped separation chamber, such that the inflow of the pulp suspension is exposed to the barrier at entry to the toroid shaped separation chamber. This will enable an instant dewatering of the fresh suspension supplied at entry to the separation chamber, which fresh suspension is at lowest concentration.

In another alternative embodiment of the apparatus is also the rotor arranged to create a circular flow of the incoming pulp suspension in the separation chamber, so that a small part of the circular flow is tangent to or following the barrier in the fluidization zone, while a larger part of the circular flow follows the toroid or torus shaped separation chamber.

In another alternative embodiment of the apparatus is the fluidization zone over the barrier small compared to the total area of the circular flow established in the separation chamber. Further the barrier is only a part of the total circumference of the circle that by revolution describes the toroid shaped separation chamber, and that the part is less than 40%, and preferably less than 25%. This will generate a local dewatering zone at optimal conditions using both the inflow velocity of the fresh pulp suspension and the fluidization effect of the rotor at a local limited zone.

In a preferred embodiment is the apparatus further arranged to give the flow a tangential velocity along the barrier, which tangential velocity is equal to or higher than a normal velocity of the flow towards the barrier. This will increase the dewatering effect over the barrier using cross flow filtering technique.

Further in a preferred embodiment is the apparatus arranged to expose the pulp suspension circulating in the toroid shaped separation chamber to the barrier more than one time. This has multiple effects as the denser fraction will be flung against the wall of the separation chamber and may be led to the outlet at highest concentration, while the dewatering effect of the fresh suspension is kept high over the barrier.

In a preferred embodiment is the toroid shaped separation chamber shaped in order to cause two simultaneous circular motions in the flow, where one motion is following the barrier around and where the other motion is circular flow in the toroid shaped separation chamber is such that only a small part of the circular flow is tangent to or following the barrier while a larger part of the circular flow follows the toroid shaped separation chamber. The rotor will add to this circular motion following the barrier, but a complementing circular motion following the toroid shaped separation chamber will be developed by the in feed of fresh pulp suspension,

The separation chamber could have several shapes of the toroid shaped separation chamber and the barrier may have a complementary form shaped as part of a torus. Alternatively could the barrier, as it is only a small part of the toroid shaped separation chamber, be shaped like a cone or a truncated cone, which will make manufacturing easier and cheaper. The barrier could also be flat or even shaped like a cylinder.

In an alternative variant of the invention could the barrier be provided with an area without apertures closest to the axis (9). This in order to reduce instant dewatering of the fresh pulp being fed in to the separation chamber and some mixing with the suspension circulating in the separation chamber. This area is relatively short in relation to the extension of the barrier in the suspension flow direction, and preferably less than 50& of said extension.

The rotor of the inventive apparatus preferably comprises upstream blades. And these upstream blades could preferably be provided with a soft geometry, in order to minimize grinding. Further the front of each upstream blade could be shovel shaped, in order to lift the pulp suspension from the barrier. Also, each upstream blade is preferably at a larger distance from the barrier at the backside of the upstream blade, in order to create a low pressure zone at the backside of the upstream blade, in order to lift the pulp suspension from the barrier.

In an alternative embodiment could the rotor also comprise downstream blades in order to create a cleaning pulse. These downstream blades may also be arranged in front of the upstream blades as seen in the rotational direction.

The rotor of the invention may have blades that are radially straight or curved.

The inventive separation apparatus may be used in different applications, such as a knotter, a screening apparatus, thickener or washing, depending on the need in the process position where it is installed. Common for all these applications are the liquid fraction with a content of smaller fibre particles and/or a content of dissolved material is separated from another fraction containing larger fibre particles.

### Brief Description of the Drawings

The present invention will now be described, for exemplary purposes, in more detail by way of embodiments and with reference to the enclosed drawings, in which:
- Fig. 1a: is a schematic view of the new principle underlying the invention
- Fig 1b: is a frist embodiment of a separation apparatus according the invention,
- Fig 1c-1e: are schematic views of different general embodiments of separation apparatuses
- Fig 2a-2d: are schematic views of different embodiments of rotor blades according to the invention
- Fig. 3: is a schematic view of a screening system with a knotter and a screening apparatus in series, both according to the invention.
- Fig. 4: is a schematic view of a washing apparatus according to the invention

### Detailed Description of Preferred Embodiments

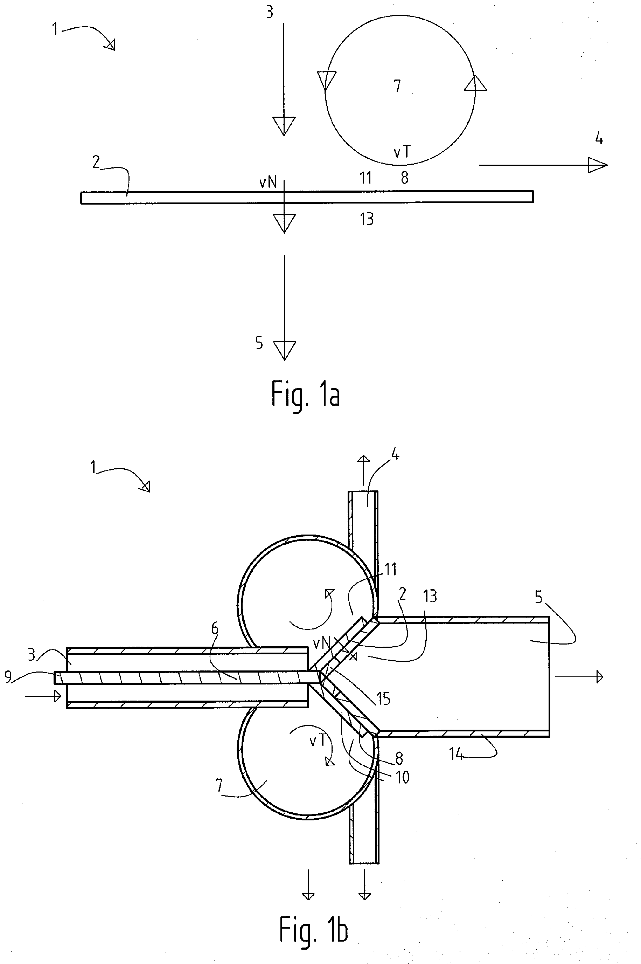

Fig. 1a shows schematically the new main principle underlying an apparatus for separating large and small particles in a pulp suspension according the invention. Fig 1b show a first embodiment of the inventive apparatus.

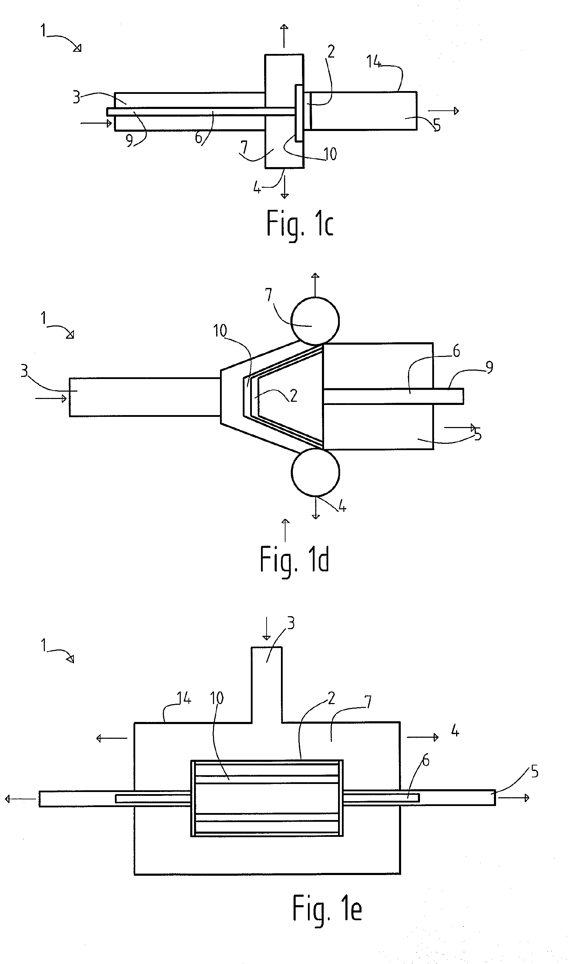

Figs 1c, 1d and 1f show schematically different embodiments for separating large and small particles.

An apparatus 1 includes a barrier 2 with apertures, an inlet 3 for pulp suspension, a first outlet 4 for material with large particles and a second outlet 5 for material with small particles. The apertures in the barrier 2 may be e.g. round holes or slits. Material with small particles may in some implementations be just a liquid.

The main idea is to convert area cost to turbulent cost and to utilize fast separation/dewatering of low surface weights. In prior art solutions in e.g. screening apparatuses a large area is used for the screening. In the present invention only a small area is used and instead energy is used to cause a secondary turbulent circular motion, which will be described in more detail below.

Further, in prior art solutions, the surface weight is high on the barrier. Especially in washing apparatuses the thickness of the pulp suspension may be large. Most of the dewatering will be made closest to the barrier. The concentration of the pulp suspension will thus be highest closest to the barrier. The further from the barrier that the pulp suspension is, the less dewatering will be performed. However, in the present invention the process will be fast. The thickness of the pulp suspension will be thin, only a few millimetres, and the pulp suspension will be removed quickly from the barrier, which will be explained in more detail below.

Pulp suspension flows in through the inlet 3 towards the barrier 2 tangentially. Preferably, the inlet 3 is narrow and centred. A rotor 6 on an axis 9 in a separation chamber 7 sets the pulp suspension in motion and maintains a rotational flow in the separation chamber 7, so that the pulp suspension flow is directed tangential along the barrier 2 and then from the barrier 2 and back again in a circular motion in order to continuously expose the barrier 2 for new material. Thus, the rotor 6 may be seen as also cleaning the barrier 2.

The rotor 6 will cause turbulence, so that a fluidization zone 8 is created in the area where the circular pulp suspension flow is close to the barrier 2. This will cause a separation. Material with smaller particles will pass through the barrier 2 and can be taken out through the second outlet 5 for material with small particles. On the other hand, material with larger particles will be removed from the barrier 2 by mechanical force by the rotor 6 and will stay on the separation chamber side, i.e. the upstream side 11 of the barrier 2. The material with larger particles may then be taken out through the first outlet 4 for material with large particles.

The tangential velocity v_{T} of the pulp suspension flow along the barrier 2 should be equal to or higher than the normal velocity v_{N} of the pulp suspension flow towards the barrier 2, preferably 5-10 times higher. If the normal velocity v_{N} towards the barrier 2 is too high, then the pulp suspension will be pressed against the barrier 2 and clog it. The flow v_{T} is a spiral screw formed flow that dependent on the rotational direction of the rotor is either twisting inwards (alternatively outwards) in upper separation chamber cross section in figure 1b, and twisting outwards (alternatively inwards) in lower separation chamber cross section.

The pulp suspension should flow towards the barrier 2 and there become fluidized in the fluidization zone 8 so that separation can take place. However, the pulp suspension should not stay too long in the fluidization zone 8 and should avoid to become pressed against the barrier 2. Instead, the pulp suspension should quickly become fluidized and separated. The pulp suspension with thus increased consistency should then quickly flow away from the barrier in order to expose the barrier for new pulp suspension. This also implies that the fluidization zone 8 should be small compared to the total flow. The rapid tangential flow together with the small fluidization zone 8 prevents clogging and provides an efficient separation with a low need of energy per produced ton.

The material coming from the fluidization zone 8 may then be circulated for a new fluidization and separation and when the separation is considered sufficient, the remaining material may be taken out through the first outlet 4 for material with large particles. Preferably, the separation chamber 7 is shaped in order to cause two simultaneous circular motions in the flow - one following the barrier 2 around and one where only a small part of the flow is tangent to or following the barrier 2, like e.g. a helix in torus shape. Calling it circular motion doesn't mean that the flow has to make perfect circles or a perfect helix in torus shape. Rather, it is preferable that all pulp suspension is exposed to the fluidization zone 8 and this implies that a slightly more complex circulation flow is necessary.

In a prior art screen apparatus the axis of the rotor is parallel to the barrier and the pulp suspension is all the time pressed against the barrier by the centrifugal force, i.e. the centrifugal force always works in the same direction as the dewatering. However, according to the present invention, the pulp suspension is exposed to the barrier 2 more than one time, which improves the dewatering of the pulp. Further, the axis of the rotor 6 is preferably not parallel to, but at an angle to the barrier 2 and the centrifugal force only partly works towards the barrier 2, which prevents clogging.

The desired circulation can be effectuated in different ways, e.g. by the shape of the barrier 2, the shape of the separation chamber 7, the shape of the rotor 6 and the direction of the incoming pulp suspension. Ideally, the flow should be in the form of a toroid or more specifically a torus and thus the shape of the separation chamber 7 and barrier 2 should preferably be in the form of a toroid or parts of a torus. However, this makes manufacture complicated, especially for the barrier 2, which also is to have apertures. One very good compromise is to make the barrier 2 like a cone or truncated cone, like in Fig. 1b or 1d, preferably with a cone angle of about 45°.

The cone-shaped barrier 2 should preferably be a cone with rounded edges following the tangential flow. The barrier 2 should preferably have an area 15 without apertures closest to the axis 9, since the normal velocity v_{N} will be highest closest to the axis 9 where the pulp suspension flows in, which causes a risk for clogging.

The invention would, however, work well also with other shapes of the barrier 2, such as a plane or a cylinder, see Fig. 1c and 1e, as long as the desired flow pattern is obtained. A barrier 2 in the form of a cylinder would, however, probably work best for a low flow through the second outlet 5 for small particles.

The separation chamber 7 is preferably shaped as a toroid or torus or, even more preferably, as a pump house having a smaller cross section diameter on the inlet than on the outlet. The separation chamber 7 should preferably also be designed, so that all or most of the pulp suspension is exposed for the fluidization zone 8 by entering in the centre. The first outlet 4 for material with large particles is preferably arranged as a tangential outlet from the separation chamber 7. In figure 1b the tangential outlet is connected to the toroid shaped separation chamber. The rotor 6 is preferably provided with upstream blades or wings 10. Any blades would work, but it is preferable that the upstream blades 10 are shaped to cause turbulence and thus fluidization, and also shaped to improve the pulp suspension flow from the barrier 2 by in some way cleaning, lifting or scraping the pulp suspension from the barrier 2. Further, it is preferred that the upstream blades 10 are shaped to minimize grinding, i.e. having a soft geometry with few sharp edges.

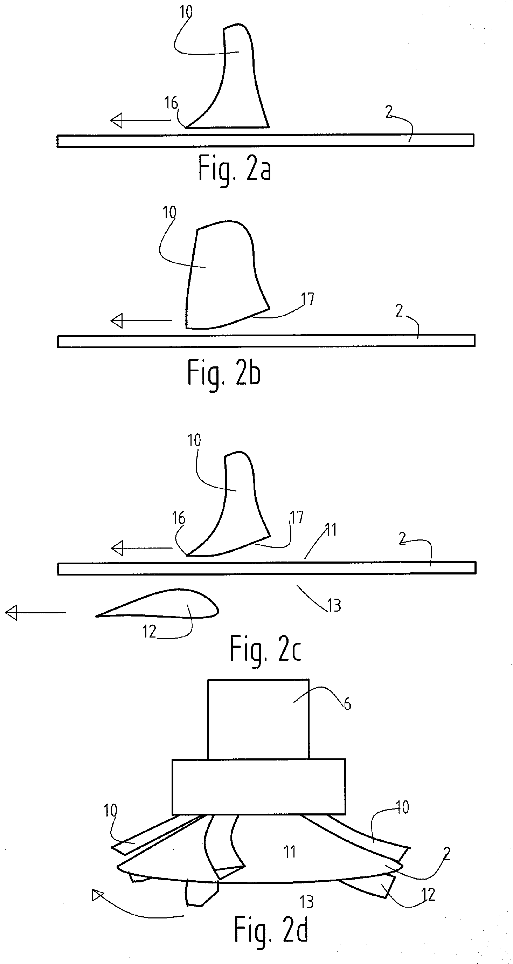

An example of an upstream blade 10 is shown in Fig. 2a, where the upstream blade 10 is provided with a leading edge 16 in shovel shape having the desired scraping effect on the surface of the barrier 2. The upstream blade 10 in Fig. 2b is at a larger distance from the barrier 2 at the backside 17 of the blade 10, in order to create a low pressure zone under the upstream blade 10, in order to lift the pulp suspension in a second way. A combination, which is preferred, is seen in Fig 2c.

The distance from the upstream blade 10 to the barrier 2 and also the shape of the upstream blade 10 are preferably different depending on the size of the particles in the incoming flow, in order to prevent grinding of particles.

In Figs 2a to c there were only upstream blades 10 on an upstream side 11 of the barrier 2, but as in Figs. 2c and 2d, it may be beneficent to also have downstream blades 12 on a downstream side 13 of the barrier 2 in order to create a cleaning pulse on the upstream side 10 of the barrier 2. The downstream blades 12, if any, are preferably arranged in front of the upstream blades 10 as seen in the rotational direction, in order to enhance said cleaning pulse. The downstream blades 12 are preferably arranged on the same rotor 6 as the upstream blades 10, but the downstream blades 12 may also be arranged on a separate rotor.

The upstream and/or downstream blades 10, 12 may be e.g. radially straight or curved. The upstream and/or downstream blades 10, 12 are preferably curved in the direction that is opposite to the direction of rotation, as in Fig. 2d.

A higher concentration on the incoming pulp suspension implies a higher speed of the rotor.

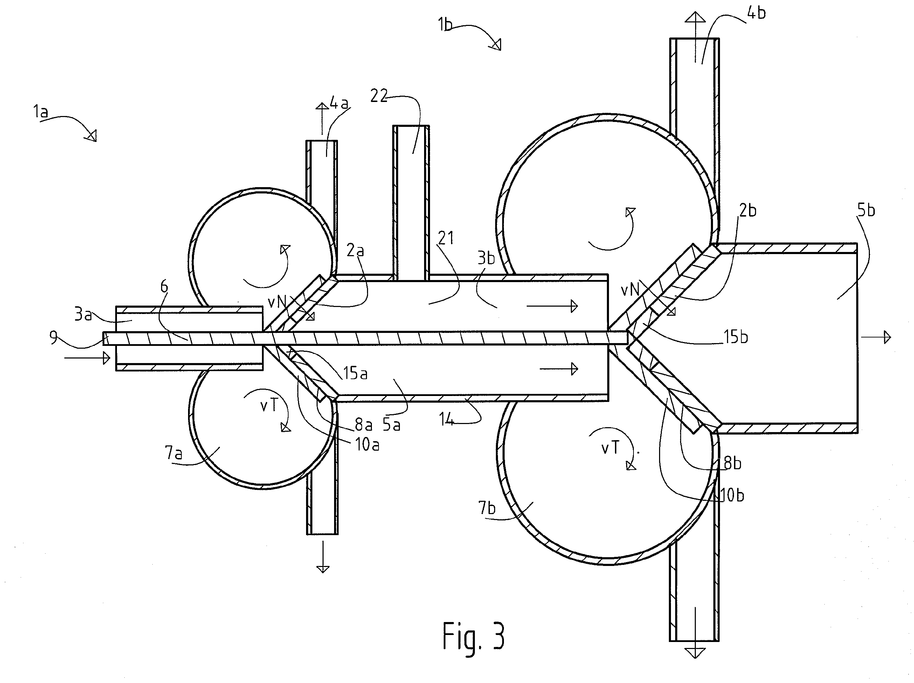

The apparatus in any of Figs. 1b-e may be an example of a knotter 1 or coarse screening apparatus. A knotter 1a is also shown in the left part of Fig. 3, where all reference numbers related to the knotter part 1a end with an "a". The knotter 1, 1a comprises a knotter barrier 2, 2a with large holes and a knotter inlet 3, 3a where the pulp suspension comes in as inject or feed. A knotter separation chamber 7, 7a and a knotter fluidization zone 8, 8a separates the pulp suspension, as described above, into large particles, called knotter reject or coarse reject, and into smaller particles, called knotter accept. The course reject is outlet through a knotter first outlet 4, 4a for large particles. The knotter accept is outlet through a knotter second outlet 5, 5a for small particles for transportation to the next step.

The apparatus in any of Figs. 1b-e may also be an example of a screening apparatus 1, in this case a fine screening apparatus. A fine screening apparatus 1b is also shown in the right part of Fig. 3, where all reference numbers relating to the screening apparatus part 1b end with a "b". The screening apparatus 1, 1b has a screen barrier 2, 2b with small holes or slots and a screen inlet 3, 3b where the pulp suspension comes in as inject or feed. A screen separation chamber 7, 7b and a screen fluidization zone 8, 8b separates the pulp suspension, as described above, into large particles, called screen reject or fine reject, and into smaller particles, called screen accept. The fine reject is outlet through a screen first outlet 4, 4b for large particles. The screen accept is outlet through a screen second outlet 5, 5b for small particles for transportation to the next step.

In Fig. 3 is shown an example of a screening system with the knotter 1a and the screening apparatus 1b. The knotter accept is outlet through the knotter second outlet 5a for small particles, into the screen 1b through the screen inlet 3b. Preferably, the knotter accept enters into the screen inlet 3b though a dilution chamber 21 having a dilution water inlet 22. The knotter accept may then be diluted to desired consistency in order to improve the screening. The screen accept is outlet through the screen second outlet 5b for small particles for transportation to the next step.

The apparatus in any of Figs. 1b-e may also be an example of a thickener 1. The thickener 1 comprises a barrier 2 with small holes and an inlet 3 where the pulp suspension comes in as feed. A separation chamber 7 and a fluidization zone 8 separates the pulp suspension, as described above, into large particles, which is the thickened pulp suspension, and into smaller particles, which is dirty liquor. The holes in the barrier 2 should be dimensioned to accept the liquor.

The thickened pulp suspension is outlet through a first outlet 4 for large particles for transportation to the next step. The dirty liquor is outlet through a second outlet 5 for small particles.

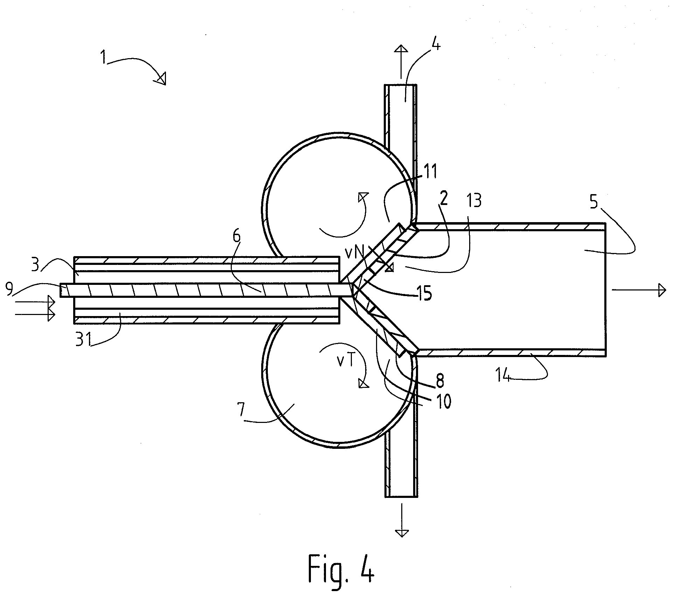

In Fig. 4 is shown an example of a washing apparatus 1, which has a barrier 2 with small holes and an inlet 3 where the pulp suspension comes in as feed to a separation chamber 7. As an example washing liquid enters through a washing liquid inlet 31 to the separation chamber 7 in order to wash the incoming pulp suspension in the separation chamber 7. This wash effect is obtained by "wash-by-dilution" as the washing liquid mixes with the fresh suspension at entry to the separation chamber, but other wash effects may be implemented. As an alternative could cleaner wash water be injected to the periphery of and tangentially to the toroid shaped separation chamber, and preferably after the barrier, said injection further supporting the swirl vT, such that the denser pulp suspension by centrifugal effect is displaced trough the wash liquid. The separation chamber 7 and a fluidization zone 8 also separates the pulp suspension, as described above, into large particles, which is the thickened and washed pulp suspension, and into smaller particles, which is dirty liquor. The holes in the barrier 2 should be dimensioned to accept the liquor.

The thickened and washed pulp suspension is outlet through a first outlet 4 for large particles for transportation to the next step. The dirty liquor is outlet through a second outlet 5 for small particles.

Of course, the invention may be used also in other types of apparatuses building on the same basic principle.

The invention shall not be considered limited to the embodiments illustrated, but can be modified and altered in many ways by one skilled in the art, without departing from the scope of the appended claims.

## Claims

1. An apparatus (1, 1a, 1b) for separating particles in a pulp suspension, which apparatus (1, 1a, 1b) comprises a housing (14), a barrier (2, 2a, 2b) with apertures, an inlet (3, 3a, 3b) for the pulp suspension, a first outlet (4, 4a, 4b) for material with large particles not having passed the barrier (2, 2a, 2b), a second outlet (5, 5a, 5b) for material with small particles having passed the barrier (2, 2a, 2b), and a rotor (6) on an axis (9), which rotor (6) is arranged to create a fluidization zone (8, 8a, 8b) near the barrier (2, 2a, 2b), a separation chamber (7, 7a, 7b) shaped like a toroid and preferably a torus or parts of a torus, with the barrier arranged as a part of the interior wall of the toroid shaped separation chamber, wherein the rotor (6) is arranged to both create a circular flow (vT) of the incoming pulp suspension in the toroid shaped separation chamber (7, 7a, 7b) and to clean the barrier (2, 2a, 2b) from the pulp suspension, **characterized in that** the barrier is arranged directly after the inlet and in the wall of the toroid shaped separation chamber, such that the inflow of the pulp suspension is exposed to the barrier at entry to the toroid shaped separation chamber.

2. An apparatus according to claim 1 **characterized in that** the inlet for the pulp suspension is connected tangentially to the toroid shaped separation chamber (7, 7a,7b), said inlet being oriented orthogonally to the toroid shaped separation chamber.

3. An apparatus according to claim 2 **characterized in that** the inlet is connected to the inner diameter of the toroid shaped separation chamber.

4. An apparatus according to claim 1, **characterized in that** the rotor (6) is arranged to create a circular flow (vT) of the incoming pulp suspension in the separation chamber (7, 7a, 7b), so that a small part of the circular flow (vT) is tangent to or following the barrier (2, 2a, 2b) in the fluidization zone (8, 8a, 8b), while a larger part of the circular flow (vT) follows the torus shaped separation chamber.

5. An apparatus (1, 1a, 1b) according to claim 4, **characterized in that** the fluidization zone (8, 8a, 8b) over the barrier is small compared to the total area of the circular flow (vT) established in the separation chamber.

6. An apparatus according to claim 5, **characterized in that** the barrier is only a part of the total circumference of the circle that by revolution describes the toroid shaped separation chamber, and that the part is less than 40%, and preferably less than 25%.

7. An apparatus (1, 1a, 1b) according to claim 6, **characterized in that** the apparatus (1, 1a, 1b) further is arranged to give the flow a tangential velocity of the suspension flow along the barrier (2, 2a, 2b), which tangential velocity is equal to or higher than a normal velocity (vN) of the suspension flow towards the barrier (2, 2a, 2b).

8. An apparatus (1, 1a, 1b) according to claim 7, **characterized in that** apparatus (1, 1a, 1b) is arranged to expose the pulp suspension circulating in the toroid shaped separation chamber to the barrier (2, 2a, 2b) more than one time.

9. An apparatus (1, 1a, 1b) according to claim 8, **characterized in that** the toroid shaped separation chamber (7) is shaped in order to cause two simultaneous circular motions in the flow, where one motion is following the barrier (2) around and where the other motion is a circular flow (vT) in the toroid shaped separation chamber such that only a small part of the circular flow (vT) is tangent to or following the barrier (2) while a larger part of the circular flow (vT) follows the toroid shaped separation chamber.

10. An apparatus (1, 1a, 1b) according to claim 6, **characterized in that** the barrier (2, 2a, 2b) is shaped as part of a torus.

11. An apparatus (1, 1a, 1b) according to claim 6, **characterized in that** the barrier (2, 2a, 2b) is shaped like a cone or a truncated cone.

12. An apparatus (1, 1a, 1b) according to claim 6, **characterized in that** the barrier (2, 2a, 2b) is flat.

13. An apparatus (1, 1a, 1b) according to claim 6, **characterized in that** the barrier (2, 2a, 2b) is shaped like a cylinder.

14. An apparatus (1, 1a, 1b) according to claim 6, **characterized in that** the barrier (2, 2a, 2b) is provided with an area (15, 15a, 15b) without apertures closest to the axis (9).

15. An apparatus (1, 1a, 1b) according to claim 4, **characterized in that** the rotor (6) comprises upstream blades (10, 10a, 10b).

16. An apparatus (1, 1a, 1b) according to claim 15, **characterized in that** the upstream blades (10, 10a, 10b) are provided with a soft geometry, in order to minimize grinding.

17. An apparatus (1, 1a, 1b) according to claim 15 or 16, **characterized in that** the front of each upstream blade (10, 10a, 10b) is shovel shaped, in order to lift the pulp suspension from the barrier (2, 2a, 2b).

18. An apparatus (1, 1a, 1b) according to any of the claims 15-17, **characterized in that** each upstream blade (10, 10a, 10b) is at a larger distance from the barrier (2, 2a, 2b) at the backside of the upstream blade (10, 10a, 10b), in order to create a low pressure zone at the backside of the upstream blade (10, 10a, 10b), in order to lift the pulp suspension from the barrier (2, 2a, 2b).

19. An apparatus (1, 1a, 1b) according to any of the claims 15-18, **characterized in that** the rotor (6) also comprises downstream blades (12) in order to create a cleaning pulse.

20. An apparatus (1, 1a, 1b) according to claim 19, **characterized in that** the downstream blades (12) are arranged in front of the upstream blades (10) as seen in the rotational direction.

21. An apparatus (1, 1a, 1b) according to any of the claims 15-20, **characterized in that** the blades (10, 10a, 10b, 12) are radially straight.

22. An apparatus (1, 1a, 1b) according to any of the claims 15-20, **characterized in that** the blades (10, 10a, 10b, 12) are curved.

## Patentansprüche

1. Vorrichtung (1, 1a, 1b) zum Trennen von Partikeln in einer Faserstoffsuspension, wobei die Vorrichtung (1, 1a, 1b) ein Gehäuse (14), eine Barriere (2, 2a, 2b) mit Öffnungen, einen Einlass (3, 3a, 3b) für die Faserstoffsuspension, einen ersten Auslass (4, 4a, 4b) für Material mit großen Partikeln, welche die Barriere (2, 2a, 2b) nicht passiert haben, einen zweiten Auslass (5, 5a, 5b) für Material mit kleinen Partikeln, welche die Barriere (2, 2a, 2b) passiert haben, und einen Rotor (6) auf einer Achse (9), wobei der Rotor (6) angeordnet ist, um eine Fluidisierungszone (8, 8a, 8b) in der Nähe der Barriere (2, 2a, 2b) zu bilden, eine wie ein Toroid und vorzugsweise ein Torus oder Teile eines Torus geformte Trennkammer (7, 7a, 7b) aufweist, wobei die Barriere als Teil der Innenwand der toroidförmigen Trennkammer angeordnet ist, wobei der Rotor (6) angeordnet ist, um sowohl einen kreisförmigen Fluss (vT) der ankommenden Faserstoffsuspension in der toroidförmigen Trennkammer (7, 7a, 7b) zu erzeugen als auch die Barriere (2, 2a, 2b) von der Faserstoffsuspension zu reinigen, **dadurch gekennzeichnet, dass** die Barriere direkt nach dem Einlass und in der Wand der toroidförmigen Trennkammer angeordnet ist, derart, dass der Einstrom der Faserstoffsuspension beim Eintritt in die toroidförmige Trennkammer der Barriere ausgesetzt ist.

2. Vorrichtung nach Anspruch 1, **dadurch gekennzeichnet, dass** der Einlass für die Faserstoffsuspension tangential mit der toroidförmigen Trennkammer (7, 7a, 7b) verbunden ist, wobei der Einlass orthogonal zu der toroidförmigen Trennkammer ausgerichtet ist.

3. Vorrichtung nach Anspruch 2, **dadurch gekennzeichnet, dass** der Einlass mit dem Innendurchmeser der toroidförmigen Trennkammer verbunden ist.

4. Vorrichtung nach nspruch 1, **dadurch gekennzeichnet, dass** der Rotor (6) angeordnet ist, um einen kreisförmigen Fluss (vT) der ankommenden Faserstoffsuspension in der Trennkammer (7, 7a, 7b) zu erzeugen, derart, dass ein kleiner Teil des kreisförmigen Flusses (vT) zu der Barriere (2, 2a, 2b) in der Fluidisierungszone (8, 8a, 8b) tangential ist oder dieser folgt, während ein größerer Teil des kreisförmigen Flusses (vT) der torusförmigen Trennkammer folgt.

5. Vorrichtung (1, 1a, 1b) nach Anspruch 4, **dadurch gekennzeichnet, dass** die Fluidisierungszone (8, 8a, 8b) über der Barriere im Vergleich zu dem Gesamtbereich des in der Trennkammer erzeugten kreisförmigen Flusses (vT) klein ist.

6. Vorrichtung nach Anspruch 5, **dadurch gekennzeichnet, dass** die Barriere nur ein Teil des Gesamtumfangs des Kreises ist, der durch Rotation die toroidförmige Trennkammer beschreibt, und dass der Teil weniger als 40 % und vorzugsweise weniger als 25 % beträgt.

7. Vorrichtung (1, 1a, 1b) nach Anspruch 6, **dadurch gekennzeichnet, dass** die Vorrichtung (1, 1a, 1b) des Weiteren angeordnet ist, um dem Fluss eine Tangentialgeschwindigkeit des Suspensionsflusses entlang der Barriere (2, 2a, 2b) zu verleihen, wobei die Tangentialgeschwindigkeit gleich oder höher ist als eine Normalgeschwindigkeit (vN) des Suspensionsflusses in Richtung der Barriere (2, 2a, 2b).

8. Vorrichtung (1, 1a, 1b) nach Anspruch 7, **dadurch gekennzeichnet, dass** die Vorrichtung (1, 1a, 1b) angeordnet ist, um die in der toroidförmigen Trennkammer zirkulierende Faserstoffsuspension der Barriere (2, 2a, 2b) mehr als einmal auszusetzen.

9. Vorrichtung (1, 1a, 1b) nach Anspruch 8, **dadurch gekennzeichnet, dass** die toroidförmige Trennkammer (7) geformt ist, um zwei gleichzeitige kreisförmige Bewegungen in dem Fluss zu bewirken, wobei eine Bewegung der Barriere (2) rund herum folgt und die andere Bewegung ein kreisförmiger Fluss (vT) in der toroidförmigen Trennkammer ist, derart, dass nur ein kleiner Teil des kreisförmigen Flusses (vT) tangential zu der Barriere (2) ist oder dieser folgt, während ein größerer Teil des kreisförmigen Flusses (vT) der toroidförmigen Trennkammer folgt.

10. Vorrichtung (1, 1a, 1b) nach Anspruch 6, **dadurch gekennzeichnet, dass** die Barriere (2, 2a, 2b) als Teil eines Torus geformt ist.

11. Vorrichtung (1, 1a, 1b) nach Anspruch 6, **dadurch gekennzeichnet, dass** die Barriere (2, 2a, 2b) kegelförmig oder kegelstumpfförmig ist.

12. Vorrichtung (1, 1a, 1b) nach Anspruch 6, **dadurch gekennzeichnet, dass** die Barriere (2, 2a, 2b) flach ist.

13. Vorrichtung (1, 1a, 1b) nach Anspruch 6, **dadurch gekennzeichnet, dass** die Barriere (2, 2a, 2b) zylinderförmig ist.

14. Vorrichtung (1, 1a, 1b) nach Anspruch 6, **dadurch gekennzeichnet, dass** die Barriere (2, 2a, 2b) mit einem Bereich (15, 15a, 15b) ohne Öffnungen versehen ist, welcher der Achse (9) am nächsten liegt.

15. Vorrichtung (1, 1a, 1b) nach Anspruch 4, **dadurch gekennzeichnet, dass** der Rotor (6) stromaufwärtige Blätter (10, 10a, 10b) aufweist.

16. Vorrichtung (1, 1a, 1b) nach Anspruch 15, **dadurch gekennzeichnet, dass** die stromaufwärtigen Blätter (10, 10a, 10b) mit einer weichen Geometrie versehen sind, um ein Zermahlen zu minimieren.

17. Vorrichtung (1, 1a, 1b) nach Anspruch 15 oder 16, **dadurch gekennzeichnet, dass** die Vorderseite jedes stromaufwärtigen Blattes (10, 10a, 10b) schaufelförmig ist, um die Faserstoffsuspension von der Barriere (2, 2a, 2b) zu heben.

18. Vorrichtung (1, 1a, 1b) nach einem der Ansprüche 15 bis 17, **dadurch gekennzeichnet, dass** sich jedes stromaufwärtige Blatt (10, 10a, 10b) an der Rückseite des stromaufwärtigen Blattes (10, 10a, 10b) in einem größeren Abstand von der Barriere (2, 2a, 2b) befindet, um an der Rückseite des stromaufwärtigen Blattes (10, 10a, 10b) eine Niederdruckzone zu erzeugen, um die Faserstoffsuspension von der Barriere (2, 2a, 2b) zu heben.

19. Vorrichtung (1, 1a, 1b) nach einem der Ansprüche 15 bis 18, **dadurch gekennzeichnet, dass** der Rotor (6) auch stromabwärtige Blätter (12) aufweist, um einen Reinigungsimpuls zu erzeugen.

20. Vorrichtung (1, 1a, 1b) nach Anspruch 19, **dadurch gekennzeichnet, dass** die stromabwärtigen Blätter (12) in Drehrichtung vor den stromaufwärtigen Blättern (10) angeordnet sind.

21. Vorrichtung (1, 1a, 1b) nach einem der Ansprüche 15 bis 20, **dadurch gekennzeichnet, dass** die Blätter (10, 10a, 10b, 12) radial gerade sind.

22. Vorrichtung (1, 1a, 1b) nach einem der Ansprüche 15 bis 20, **dadurch gekennzeichnet, dass** die Blätter (10, 10a, 10b, 12) gekrümmt sind.

## Revendications

1. Appareil (1, 1a, 1b) destiné à séparer des particules dans une suspension de pâte à papier, lequel appareil (1, 1a, 1b) comprend un carter (14), une barrière (2, 2a, 2b) munie d'ouvertures, une entrée (3, 3a, 3b) pour la suspension de pâte, une première sortie (4, 4a, 4b) pour de la matière à grosses particules n'ayant pas traversé la barrière (2, 2a, 2b), une seconde sortie (5, 5a, 5b) pour de la matière à petites particules ayant traversé la barrière (2, 2a, 2b) et un rotor (6) sur un axe (9), lequel rotor (6) est agencé pour créer une zone de fluidisation (8, 8a, 8b) près de la barrière (2, 2a, 2b), une chambre de séparation (7, 7a, 7b) ayant la forme d'un toroïde, préférablement d'un tore ou de parties d'un tore, la barrière étant agencée en tant que partie de la paroi intérieure de la chambre de séparation de forme toroïdale, dans lequel le rotor (6) est agencé pour, d'une part, créer un écoulement circulaire (vT) de la suspension de pâte entrante dans la chambre de séparation de forme toroïdale (7, 7a, 7b) et d'autre part nettoyer la barrière (2, 2a, 2b) de la suspension de pâte, **caractérisé en ce que** la barrière est agencée directement après l'entrée et dans la paroi de la chambre de séparation de forme toroïdale, de telle sorte que l'écoulement entrant de pâte soit exposé à la barrière à l'entrée dans la chambre de séparation de forme toroïdale.

2. Appareil selon la revendication 1, **caractérisé en ce que** l'entrée de la suspension de pâte est reliée tangentiellement à la chambre de séparation de forme toroïdale (7, 7a, 7b), ladite entrée étant orientée orthogonale à la chambre de séparation de forme toroïdale.

3. Appareil selon la revendication 2, **caractérisé en ce que** l'entrée est connectée au diamètre intérieur de la chambre de séparation de forme toroïdale.

4. Appareil selon la revendication 1 **caractérisé en ce que** le rotor (6) est agencé pour créer un écoulement circulaire (vT) de la suspension de pâte entrante dans la chambre de séparation (7, 7a, 7b), de sorte qu'une petite partie de l'écoulement circulaire (vT) soit tangent à la barrière (2, 2a, 2b) ou la suive dans la zone de fluidisation (8, 8a, 8b), tandis qu'une plus grande partie de l'écoulement circulaire (vT) suit la chambre de séparation de forme toroïdale.

5. Appareil (1, 1a, 1b) selon la revendication 4, **caractérisé en ce que** la zone de fluidisation (8, 8a, 8b) au-dessus de la barrière est petite comparée à l'aire totale de l'écoulement circulaire (vT) établi dans la chambre de séparation.

6. Appareil selon la revendication 5, **caractérisé en ce que** la barrière ne représente qu'une partie de la circonférence totale du cercle qui décrit, par révolution, la chambre de séparation de forme toroïdale, et **en ce que** cette partie est inférieure à 40 %, et de préférence inférieure à 25 %.

7. Appareil (1, 1a, 1b) selon la revendication 6, **caractérisé en ce que** l'appareil (1, 1a, 1b) est en outre agencé pour donner à l'écoulement une vitesse tangentielle de l'écoulement de la suspension le long de la barrière (2, 2a, 2b), laquelle vitesse tangentielle est supérieure ou égale à une vitesse normale (vN) de l'écoulement de la suspension en direction de la barrière (2, 2a, 2b).

8. Appareil (1, 1a, 1b) selon la revendication 7, **caractérisé en ce que** l'appareil (1, 1a, 1b) est agencé pour exposer plus d'une fois à la barrière (2, 2a, 2b) la suspension de pâte circulant dans la chambre de séparation de forme toroïdale.

9. Appareil (1, 1a, 1b) selon la revendication 8, **caractérisé en ce que** la chambre de séparation de forme toroïdale (7) a une forme destinée à provoquer deux mouvements circulaires simultanés dans l'écoulement, un mouvement consistant à suivre la barrière (2) et l'autre mouvement étant un écoulement circulaire (vT) dans la chambre de séparation de forme toroïdale de telle sorte que seule une petite partie de l'écoulement circulaire (vT) soit tangente à la barrière (2) ou la suive, tandis qu'une partie plus grande de l'écoulement circulaire (vT) suit la chambre de séparation de forme toroïdale.

10. Appareil (1, 1a, 1b) selon la revendication 6, **caractérisé en ce que** la barrière (2, 2a, 2b) a la forme d'une partie d'un tore.

11. Appareil (1, 1a, 1b) selon la revendication 6, **caractérisé en ce que** la barrière (2, 2a, 2b) a la forme d'un cône ou d'un tronc de cône.

12. Appareil (1, 1a, 1b) selon la revendication 6, **caractérisé en ce que** la barrière (2, 2a, 2b) est plate.

13. Appareil (1, 1a, 1b) selon la revendication 6, **caractérisé en ce que** la barrière (2, 2a, 2b) a la forme d'un cylindre.

14. Appareil (1, 1a, 1b) selon la revendication 6, **caractérisé en ce que** la barrière (2, 2a, 2b) est pourvue d'une zone (15,15a, 15b) sans ouvertures qui se trouve le plus près de l'axe (9).

15. Appareil (1, 1a, 1b) selon la revendication 4, **caractérisé en ce que** le rotor (6) comprend des lames amont (10, 10a, 10b).

16. Appareil (1, 1a, 1b) selon la revendication 15, **caractérisé en ce que** les lames amont (10, 10a, 10b) présentent une géométrie douce, afin de minimiser le défibrage.

17. Appareil (1, 1a, 1b) selon la revendication 15 ou 16, **caractérisé en ce que** l'avant de chaque lame amont (10, 10a, 10b) est en forme de pelle, afin de soulever la suspension de pâte de la barrière (2, 2a, 2b).

18. Appareil (1, 1a, 1b) selon l'une quelconque des revendications 15 à 17, **caractérisé en ce que** chaque lame amont (10, 10a, 10b) est à une distance de la barrière (2, 2a, 2b) plus élevée du côté arrière de la lame amont (10, 10a, 10b), afin de créer une zone de basse pression du côté arrière de la lame amont (10, 10a, 10b), afin de soulever la suspension de pâte de la barrière (2, 2a, 2b).

19. Appareil (1, 1a, 1b) selon l'une quelconque des revendications 15 à 18, **caractérisé en ce que** le rotor (6) comprend aussi des lames aval (12) afin de créer une impulsion de nettoyage.

20. Appareil (1, 1a, 1b) selon la revendication 19, **caractérisé en ce que** les lames aval (12) sont agencées en avant des lames amont (10) quand on les regarde dans le sens de rotation.

21. Appareil (1, 1a, 1b) selon l'une quelconque des revendications 15 à 20, **caractérisé en ce que** les lames (10, 10a, 10b, 12) sont rectilignes dans le sens radial.

22. Appareil (1, 1a, 1b) selon l'une quelconque des revendications 15 à 20, **caractérisé en ce que** les lames (10, 10a, 10b, 12) sont incurvées.
